(19) Europäisches Patentamt
European Patent Office
Office européen des brevets

(11) Publication number: 0 174 509 A2

(12) # EUROPEAN PATENT APPLICATION

(21) Application number: 85110116.2

(22) Date of filing: 12.08.85

(51) Int. Cl.⁴: C 10 L 1/10
B 01 F 17/00

(30) Priority: 10.08.84 JP 168545/84

(43) Date of publication of application: 19.03.86 Bulletin 86/12

(84) Designated Contracting States: DE SE

(71) Applicant: KURARAY CO., LTD.
1621 Sakazu
Kurashiki-City Okayama Prefecture(JP)

(72) Inventor: Doi, Harumasa c/o Tajimayama-Ryo
98, Ohta, Hasaki-machi
Kashima-gun Ibaraki-prefecture(JP)

(72) Inventor: Miyazaki, Hirotoshi
98, Ohta, Hasaki-machi Kashima-gun
Ibaraki-pref.(JP)

(72) Inventor: Abe, Kunio
1959-16, Noda Omigawa-machi
Katori-gun Chiba-pref.(JP)

(74) Representative: Vossius Vossius Tauchner Heunemann Rauh
Siebertstrasse 4 P.O. Box 86 07 67
D-8000 München 86(DE)

(54) **A dispersing agent for coal-water slurry.**

(57) A dispersing agent for coal-water slurry comprising a polyelectrolyte made from a modified x-olefin-maleic anhydride copolymer which has a long hydrocarbon residue at the end of the molecule or in the main chain and gives a coal-water slurry of excellent fluidity and excellent stability.

EP 0 174 509 A2

Croydon Printing Company Ltd.

VOSSIUS · VOSSIUS · TAUCHNER · HEUNEMANN · RAUH
PATENTANWÄLTE
0174509

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our ref.: T 969 EP
Case 59-168545-W

August 12, 1985

Kuraray Co., Ltd.
Kurashiki-City, Japan

"A Dispersing Agent for a Coal-Water Slurry"

This invention relates to a dispersing agent for a coal-water slurry comprising a polyelectrolyte made from a modified α-olefin-maleic anhydride copolymer. By using the polyelectrolyte to make the coal-water slurry, it is possible to easily obtain a coal-water slurry which is highly fluid even at high coal concentrations and remains "even" when allowed to stand for a long period. The term "even" means that the concentration of the slurry is uniform. Non-uniformity, by contrast, would result in the sedimentation of the coal in the slurry.

Recently, efforts have been made to reduce dependency on petroleum as energy source, given the uncertainty of its supply. It has become an objective to develop an energy source other than petroleum which can be supplied more reliably and constantly. Because of its large, worldwide underground reserves, coal has been studied as one such energy source and many methods to use coal are under investigation. However, compared with petroleum, coal is very disadvantageous as regards handling, e.g. transportation or storage, given its solid state.

Therefore, possibilities have been examined to make coal easier to handle, as for instance in the form of a fluid,

obtained by pulverizing coal and dispersing the coal powder in water, methanol or oil. However, a coal-oil slurry or coal-methanol slurry are not completely independent of petroleum. Consequently, a mixture comprising water and the coal powder dispersed in the water, that is a coal-water slurry, has been considered.

The coal-water slurry has advantages as regards transportation, storage and combustion, as combustion can be controlled better, transportation by pipeline is easier and storage is more convenient. For with a slurry it is not necessary to devise a method to prevent it from spontaneous ignition or from scattering as is the case with a powder. However, since the slurry contains water, its calorific value as a fuel is necessarily lower and transportation costs are inevitably higher. Therefore, the concentration of the coal in the slurry should be as high as possible.

On the other hand, if the concentration of the slurry is increased, the viscosity of the slurry increases as well, and as a result its fluidity is lowered or lost. To solve these problems, i.e. to disperse the coal in water in such a way that the resulting a coal-water slurry is highly fluid, a dispersing agent, such as formaldehyde, aromatic sulphonic acid condensates, salts of lignin sulphonic acid, polyoxyethylenealkylphenyl ethers, salts of polyacrylic acid, salts of a copolymer made from acrylic acid and vinyl monomers, has been used.

However, the coal-water slurry obtained using the above dispersing agents is not fluid enough at high concentrations, e.g. at a concentration of 70% by weight, nor does it remain even when it is allowed to stand for a long period of time.

Summary of the Invention

It is the object of the present invention to provide a dispersing agent facilitating the preparation of a coal-water slurry which is highly fluid at high coal concentrations but does not turn uneven when allowed to stand for a long period.

It is another object of the present invention to provide a coal-water slurry which is highly fluid at high coal concentrations but does not turn uneven when allowed to stand for a long period.

According to the present invention, the above objects are achieved by using a dispersing agent comprising, as an effective component, a polyelectrolyte made by reacting an alkali metal compound, an alkali earth metal compound, ammonia or an amine with a modified α-olefin-maleic anhydride copolymer comprising a structural unit [I] based on the α-olefin, a structural unit [II] based on maleic anhydride and a modified structural unit selected from a group consisting of

[A] a terminal group [III] of the general formula

$R^1S-$ wherein $R^1$ represents a hydrocarbon residue having 4 to 30 carbon atoms, and

[B] a structural unit [IV] of the general formula

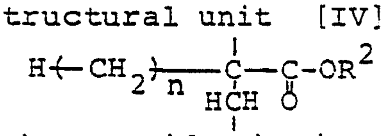

wherein $R^2$ represents a hydrocarbon residue having 4 to 30 carbon atoms, and n is zero or 1, the molar ratio of unit [IV] to unit [II] ranging from 0.005 to 0.2,

said copolymer containing units [I] and [II] in such an amount that the molar ratio of unit [I] to unit [II] is in the range of from 0.8 to 3.0 and having a weight-average molecular weight ranging from 1,000 to 20,000.

The above polyelectrolyte is obtained by reacting an alkali metal compound, an alkali earth metal compound, ammonia or an amine with a modified α-olefin-maleic anhydride copolymer which is obtained by copolymerizing an α-olefin and maleic anhydride in solution and in the presence of a modifier selected from the group consisting of a thiol of the general formula $R^1SH$ [IIIa], wherein $R^1$ represents a hydrocarbon residue having 4 to 30 carbon atoms, and an unsaturated acid ester of the general formula

$H\text{-}(CH_2)_n\text{-}\underset{HCH}{\overset{\|}{C}}\text{-}\underset{O}{\overset{\|}{C}}\text{-}OR^2$ [IVa] wherein $R^2$ represents a hydrocarbon residue having 4 to 30 carbon atoms, and n is zero or 1.

Usually, α-olefin-maleic anhydride copolymers are almost alternating copolymers comprising a structural unit [I] based on the α-olefin and a structural unit [II] based on the maleic anhydride, that is, a structural unit [I-II]. Also the modified α-olefin-maleic anhydride copolymer used in the invention, is almost an alternating copolymer. For example, when the thiol is used as a modifier in the copolymerization, in many cases, an alternating α-olefin-maleic anhydride copolymer having a group of the general formula $R^1S\text{-}$ [III] as a terminal group is obtained. In many cases, when the unsaturated acid ester is used as a modifier, an α-olefin-maleic anhydride copolymer is obtained wherein a small part of the main chain comprising the structural unit [I-II] is substituted for the unit of the general formula $H\text{-}(CH_2)_n\text{-}\underset{HCH}{\overset{|}{C}}\text{-}\underset{O}{\overset{\|}{C}}\text{-}OR^2$ [IV].

Preferably, the above polyelectrolyte is soluble in water. However, it may be hydrophilic (not soluble in pure water, but in water containing a basic compound) as long as it dissolves in the slurry.

α-olefins suitable for use in manufacturing the above modified α-olefin-maleic anhydride copolymer include straight or branched α-olefins having 2 to 12 carbon atoms, preferably 2 to 8 carbon atoms. Specific examples of suitable α-olefins are ethylene, propylene, butene-1, butene-2, isobutylene, isoprene, pentene-1, pentene-2, 2-methyl-1-butene, 2-methyl-2-butene, hexene-1, 2-methyl-1-pentene, 3-methyl-1-pentene, 4-methyl-1-pentene, 2-ethyl-1-butene, butadiene, 1,3-pentadiene, 1,4-hexadiene, 2,3-dimethyl-2-butene and diisobutylene. α-olefins having 4 carbon atoms and the mixture thereof such as " return B.B "(a steam cracked mixture of butenes from the butadien plant raffinate) are preferred. Isobutylene is most preferred.

These α-olefins can be used singly or in the form of a mixture of two or more of them.

It is preferable to use pure maleic anhydride. However, a small part of maleic anhydride may be substituted for its derivatives such as maleic acid, maleic acid mono- or dialkyl ester, citraconic acid and chloride derivatives thereof,

On the other hand, the modifier used in the copolymerization may be a thiol of the general formula $R^1SH$ [IIIa] wherein $R^1$ represents a hydrocarbon residue having 4 to 30 carbon atoms, or an unsaturated acid ester of the general formula

$H{-}(CH_2)_n{-}\underset{\underset{HCH}{\|}}{C}{-}\underset{\underset{O}{\|}}{C}{-}OR^2$ [IVa] wherein $R^2$ represents a hydrocarbon residue having 4 to 30 carbon atoms, and n is zero or 1.

In the above formula, $R^1$ or $R^2$ is preferably a hydrocarbon residue having 8 to 28 carbon atoms, more preferably 10 to 25 carbon atoms. Specific examples of the hydrocarbon residues include a straight alkyl group such as n-octyl, n-nonyl, n-dodecyl, n-hexadecyl, n-octadecyl, n-eicosyl or n-docosyl, a branched

alkyl group such as 2-ethylhexyl or t-dodecyl, an alicyclic alkyl group such as cyclohexyl or cyclooctyl and an aryl group such as phenyl, tolyl or naphthyl. In the hydrocarbon residue halogens may be substituted for part of the hydrogen atom. The straight or branched alkyl groups are the most suitable ones of these hydrocarbon residues.

Thiols suitable as modifiers include n-butylmercaptan, t-butylmercaptan, n-hexylmercaptan, n-octylmercaptan, t-octylmercaptan, n-dodecylmercaptan, t-dodecylmercaptan, n-tetradecylmercaptan, n-hexadecylmercaptan, n-octadecylmercaptan and n-eicosylmercaptan.

Unsaturated acid esters useful as modifiers include n-octylmethacrylate, n-dodecylmethacrylate, t-dodecylmethacrylate, n-hexadecylmethacrylate, n-docosylmethacrylate and 2-ethylhexylacrylate.

The molar ratio of the structural unit [I] to the structural unit [II] in the modified α-olefin-maleic anhydride copolymer preferably ranges from 0.8 to 3.0, more preferably 0.8 to 1.2. Most preferably the ratio is about 1, as mentioned above.

When the thiol is used as modifier, the copolymer comprises the structural unit [I] and [II] in the main chain and the group [III] as terminal group. On the other hand, when the unsaturated acid ester is used, the copolymer comprises the structural units [I], [II] and [IV] in the main chain.

Preferably the molar ratio of the structural unit [IV] to the structural unit [II] ranges from 0.005 to 0.2, more preferably from 0.01 to 0.1.

The weight average molecular weight of the modified

copolymer ranges from 1,000 to 20,000, preferably from 5,000 to 15,000. If the molecular weight is beyond these ranges, it is diffucult to disperse the coal in the water even if the polyelectrolyte is used.

As mentioned above, the modofied α-olefin-maleic anhydride copolymer is obtained by copolymerizing the α-olefin and maleic anhydride in solution and in the presence of the modifier.

The α-olefin and the maleic acid are fed into the copolymerization mixture in a molar ratio of from 0.8 to 3.0, preferably of 0.8 to 1.2. Most preferably the ratio is about 1.

In the copolymerization, conventional radical initiators are preferably used. Examples of suitable initiators include azo compounds such as azo-bis-isobutyl-nitrile or azo-bis-1-cyclohexane-1-carbonitrile, and peroxides such as cumene hydroperoxide, dicumyl hydroperoxide, t-butyl hydroperoxide, benzoyl peroxide and lauroyl peroxide.

Examples of the solvent used in the copolymerization include ketones such as acetone or methylethylketone, esters such as methylacetate, ethylacetate or methylpropionate, ethers such as tetrahydrofuran or dioxane, aromatic hydrocarbons having 8 to 12 carbon atoms such as benzene, xylene, toluene, ethylbenzene, n-butylbenzene, t-butylbenzene isopropylbenzene or p-cymene. The aromatic hydrocarbons are most preferred among the solvent. Ethylbenzene, isopropylbenzene or p-cymene are especially advantageous in respect of copolymer yield and easier control of the molecular weight of the copolymer.

The amount of the thiol used as modifier in the

copolymerization preferably ranges from 0.7 to 30 moles per one mole of maleic anhydride, and the amount of the unsaturated acid ester preferably ranges from 0.005 to 0.2 moles per one mole of maleic anhydride.

The solvent, monomer, initiator and modifier may be added at the initial stage of the copolymerization or successively during the copolymerization.

The copolymerization temperature ranges from 0 to 160°C. When alkylbenzene is used as solvent, it may range from 60 to 130°C, more preferably from 80 to 120°C.

In the invention, the modified α-olefin-maleic anhydride copolymer is used in the form of a polyelectrolyte obtained by reaction with a basic compound; an alkali metal compound such as its hydroxide, its carbonate or its salt of an organic acid, an alkali earth metal compound such as its hydroxide, its carbonate or its salt of organic acid, ammonia or an amine. The basic compounds suitable for use include sodium hydroxide, potassium hydroxide, lithium hydroxide, magnesium hydroxide, calcium hydroxide, sodium carbonate, calcium carbonate, potassium acetate, sodium acetate and ammonia.

The modified α-olefin-maleic anhydride copolymer is reacted with the basic compound in the solvent (water is most preferred) at room temperature or an elevated temperature under normal pressure. The amount of the basic compound varies with the type of basic compound or the reaction conditions used. Generally, the amount is such that the molar ratio of the basic compound to the maleic anhydride residue of the copolymer ranges from 0.6 to 2. The polyelectrolyte obtained in the reaction has a degree of neutralization of 0.3 to 1.0

with respect to all carboxyl groups based on the maleic anhydride residue of the copolymer. If the degree of neutralization is lower, no dispersing effect of the polyelectrolyte is observed in the slurry.

The smaller the particle size of the coal powder in the slurry, the better is its dispersion. Therefore, a particle size of the powder should preferably be small. However, pulverization of the coal involves expenses and the fine powder used in a steampower plant usually has such a size so that 80 percent of the powder pass through a sieve of 200 mesh (about 74 microns). Therefore this particle size is sufficient for the coal-water slurry.

The dispersing agent of the invention is used in the same manner as the dispersing agent known before. For example, if the coal is pulverized in the dry state, the dispersing agent is added to the water and the dry coal powder is added to the aqueous solution containing the dispersing agent to form a slurry. On the other hand, when the coal is pulverized in wet state, the dispersing agent is added to the water to be used for pulverizing the coal before pulverization is started or is placed into the pulverizer during pulverization or is added to the mixture of water and pulverized coal after pulverization.

The amount of the dispersing agent used in the invention varies with the type of coal, the particle size of the powder of the coal or the like. Usually, if the dispersing agent is used in the range of from 0.01 to 5.0 % by weight, preferably of

from 0.05 to 2.0 % by weight based on the coal, the dispersing effect is high enough. Generally, the upper limit of the concentration of the coal in the slurry that shows fluidity is 50 % by weight if no dispersing agent is used. However, if the dispersing agent of the invention is used, the slurry obtained shows fluidity and is transportable by pipelines even at a concentration of 70 % by weight (or most preferably 72 % by weight), because the dispersing agent of the invention lowers the viscosity of the slurry and the slurry shows stability when it is allowed to stand for a long period.

The dispersing agent can be used together with a surface activator or a protective colloid such as polyoxyethylenealkyl phenyl ether, salt of polyacrylic acid, salt of polyphosphine, carboxymethyl cellulose or polyvinyl alcohol.

The invention will now be described in more detail in the following examples.

Example 1

437 g of ethylbenzene(solvent) was placed into an autoclave(content: 1000ml) having an agitator and the atomosphere was replaced by $N_2$. 28.3 g of isobutylene was added. The temperature in the autoclave was maintained at 90°C. A solution containing 100 g of ethylbenzene, 45 g of maleic anhydride(molar ratio to isobutylene: 1/1.1), 2.22 g of benzoylperoxide(initiator) and 10.35 g of n-butylmercaptan(modifier) was fed into the above autoclave successively during 4 hours and a copolymerization reaction was carried out. After copolymerization,

the precipitated particles were taken out and dried. Conversion was 96 %. The obtained particle was an alternating isobutylene-maleic anhydride copolymer having n-butylmercapto group as a terminal group and having a weight average molecular weight of 2,100.

25 parts by weight of the above particles was added to an aqueous solution containing 6.34 parts by weight of sodium hydroxide and 150 parts by weight of water to obtain an aqueous solution of the sodium salt of the alternating copolymer. The aqueous solution obtained had a concentration of 19.1 % by weight and the degree of neutralization of the copolymer was 0.5.

Coal powder as shown in Table 1 was added to the solution prepared above in such an amount that the salt content, based on the coal, was 1.0 % and the concentration of the coal, based on the slurry was 70 % by weight. Thereafter, the mixture was agitated at 9000 rpm for 3 minutes.

Table 1

| | | Coal (A) mined in China | Coal (B) mined in Australia |
|---|---|---|---|
| Content | | | |
| Inherent moisture | (%) | 5.4 | 2.5 |
| Ash | (%) | 5.1 | 12.1 |
| Volatile matter | (%) | 33.8 | 36.6 |
| Fixed carbon | (%) | 55.7 | 48.8 |
| Particle size | | | |
| 200 mesh pass | (%) | 94.8 | 96.5 |

The viscosity of the slurry was measured at 25°C using a Broockfield viscometer (BL viscometer : rotar number:3) and fluidity was observed.

200 cc of the slurry was charged into a sampling tube having a diameter of 58 mm and a height of 115 mm, and allowed to stand for one month. Thereafter, the concentration of the slurry was measured by withdrawing 50 g of the slurry from the upper layer and the bottom layer. The concentration in the upper layer and the bottom layer can be an index of the stability of the slurry. The results are shown in Table 3.

Example 2 - 11 and Comparative Example 1

The isobutylene and maleic anhydride were copolymerized in the same manner as in Example 1 except for the type of modifier, amount of initiator and modifier, and temperature. The powder obtained was an alternating isobutylene-maleic anhydride copolymer having a weight average molecular weight shown in Table 3 and having a terminal mercapto group. The alternating copolymer was added to an aqueous solution containing sodium hydroxide, calcium hydroxide and a mixture thereof to form a salt of the copolymer according to the recipe shown in Table 2.

The slurry was prepared in the same manner as in Example 1 except for using the salt obtained above. The fluidity and the stability of the slurry were measured. The results are shown in Table 3.

For comparison, an alternating isobutene-maleic anhydride copolymer and its esterified copolymer were prepared, in which half the carboxyl groups based on maleic anhydride were esterified by n-octyl alcohol. These copolymers were dissolved in water to form salts of these copolymers in the same way as above. The slurry obtained did not have a viscosity lower than any one of the above Examples using the above salts.

0174509

Table 2

| | Condition of polymerization | | | | | | | | Condition for Dissolving | | | Solution | |
|---|---|---|---|---|---|---|---|---|---|---|---|---|---|
| | Temp. of polymerization | solution fed for polymerization | | | | | | Conversion | Basic compound | | Amount of Water | Conc. | Degree of Neutralization |
| | | Modifier | | | Initiator | | | | | | | | |
| | (°C) | Kind | Amount (g) | Mole % based on MAN | Kind | Amount (g) | Mole % based on MAN | (%) | Kind | Amount (pt. per 25 pt. of polymer) | (pt. per 25 pt of polymer) | (%) | |
| Example 1 | 90 | n-butyl mercaptan | 10.35 | 25 | BPO | 2.22 | 2 | 96.0 | NaOH | 6.34 | 150 | 19.1 | 0.5 |
| do 2 | do | n-dodecyl mercaptan | 27.81 | 30 | do | do | do | 94.1 | do | 6.38 | do | 19.5 | do |
| do 3 | 80 | do | 3.71 | 4 | AZN | 1.51 | do | 99.2 | do | 6.46 | do | 21.3 | do |
| do 4 | do | do | do | do | do | do | do | do | $Ca(OH)_2$ / NaOH | 7.02 / 5.17 | do | 22.6 | 1.0 (0.6/0.4) |
| do 5 | do | do | do | do | do | do | do | do | NaOH | 12.92 | do | 21.8 | 1.0 |
| do 6 | do | do | do | do | do | do | do | do | do | 3.88 | do | 20.4 | 0.3 |
| do 7 | 90 | t-dodecyl mercaptan | 5.50 | 6 | BPO | 2.22 | do | 98.5 | do | 6.38 | do | 19.9 | 0.5 |
| do 8 | 80 | n-hexadecyl mercaptan | 7.12 | do | AZN | 0.76 | 1 | 99.8 | do | 6.33 | do | 22.4 | do |
| do 9 | do | do | do | do | do | do | do | do | $Ca(OH)_2$ | 5.75 | do | 21.0 | do |
| do 10 | 90 | n-octadecyl mercaptan | 7.89 | do | BPO | 2.22 | 2 | 98.9 | NaOH | 6.34 | do | 20.7 | do |
| do 11 | 80 | do | 1.97 | 1.5 | do | do | 2 | 98.0 | do | 6.52 | do | 20.8 | do |
| Comparative Example 1 | 105 | - | - | - | AZN | 1.51 | 2 | 98.1 | do | 6.38 | do | 21.2 | do |

Note: BPO: Benzoylperoxide
AZN: Azobisisobutylnitrile

Comparative Example 2 - 4

A slurry was prepared in the same manner as in Example 1 except for using a commercial dispersing agent: a sodium salt of formaldehyde-naphthalene sulphonic acid condensate, polyoxyethylene(10 units)nonylphenyl ether and its sodium sulfate. The results are shown in Table 3.

Table 3

| | Dispersing agent | | | | Properties of slurry | | | | | | | | | |
|---|---|---|---|---|---|---|---|---|---|---|---|---|---|---|
| | Isobutylene-maleic anhydride copolymer | | salt of copolymer | | Coal mined in China | | | | Coal mined in Australia | | | | | |
| | Weight average molecular weight | Terminal group | Salt | Degree of neutralization | Viscosity (cp) | Fluidity | Concentration after 1 month (wt%) Upper | Bottom | Viscosity (cp) | Fluidity | Concentration after 1 month (wt%) Upper | Bottom |
| Example 1 | 2,100 | n-butyl mercapto | Na | 0.5 | 2,100 | high | 69.6 | 70.4 | 2,230 | high | 69.5 | 70.4 |
| do 2 | 1,500 | n-dodecyl mercapto | do | do | 1,980 | high | 69.5 | 70.4 | 2,250 | high | 69.5 | 70.5 |
| do 3 | 7,200 | do | do | do | 1,130 | high | 68.2 | 71.2 | 1,300 | high | 68.2 | 71.1 |
| do 4 | do | do | Ca/Na | 0.6/0.4 | 2.160 | high | 89.7 | 70.5 | 2,450 | high | 69.4 | 70.4 |
| do 5 | do | do | Na | 1.0 | 2,200 | high | 69.6 | 70.3 | 2,500 | high | 69.5 | 70.3 |
| do 6 | do | do | do | 0.3 | 1.540 | high | 68.9 | 70.9 | 1,590 | high | 69.1 | 71.0 |
| do 7 | 6,450 | t-dodecyl mercapto | do | 0.5 | 2,120 | high | 69.6 | 70.4 | 2,400 | high | 69.6 | 70.4 |
| do 8 | 6,150 | n-hexyl mercapto | do | do | 960 | high | 68.2 | 71.8 | 1,100 | high | 68.9 | 71.9 |
| do 9 | do | do | Ca | do | 1,930 | high | 69.6 | 70.5 | 2,180 | high | 69.7 | 70.5 |
| do 10 | 6,450 | n-octadecyl mercapto | Na | do | 890 | high | 67.9 | 71.5 | 980 | high | 67.9 | 71.3 |
| do 11 | 19,100 | do | do | do | 1,830 | high | 69.4 | 70.5 | 1,990 | high | 69.5 | 70.5 |
| Comparative Example 1 | 4,230 | - | do | do | more than 20,000 | no | - | - | more than 20,000 | no | - | - |
| Comparative Example 2 | Sodium salt of formaldehyde-naphthalene sulphonic acid condensate | | | | 8,990 | no | - | - | 4,320 | poor | - | - |
| Comparative Example 3 | Polyoxyethylene(10 units) nonyl phenyl ether | | | | more than 20,000 | no | - | - | more than 20,000 | no | - | - |
| Comparative Example 4 | Sodium sulfate of poly-oxyethylen(10 units)nonyl phenyl ether | | | | do | no | - | - | do | no | - | - |

Example 12

328.0 g of ethylbenzene(solvent) was charged into an autoclave(content: 1000 ml) having an agitator and the atomosphere was replaced by $N_2$. 30.9 g of isobutylene was added. The temperature(temperature of polymerization) in the autoclave was maintained at 105°C. A solution containing 150 g of methylisopropyl ketone, 46.5 of maleic anhydride(molar ratio to isobutylene:1/1.16), 10.1 g n-docosylmethacrylate (molar ratio to maleic anhydride: 0.054/1; modifier) and 2.05 g of azo-bis-isobutylnitrile(initiator) was added to the above autoclave successively during 4 hours and a polymerization was carried out. After polymerization, the precipitated particles were taken out and dried. The conversion was 98.5 %. The product obtained was a polymer of n-docosylmethacrylate, isobutylene and maleic anhydride in a molar ratio of 0.054/1/1. The weight average molecular weight of the polymer was 9,800.

10 parts by weight of the above polymer was added to an aqueous solution containing 5.09 parts by weight of 26.5 % ammonia water and 120 parts by weight of water to obtain an aqueous solution of the ammonium salt of the polymer. The aqueous solution obtained had a concentration of 9.65 % by weight and the degree of neutralization of the polymer was 0.7.

The coal powder shown in Table 4 was added to the solution prepared above in such an amount that the salt content based on the coal was 0.5 % and the concentration of the coal based on the slurry was 70 % by weight. Thereafter, the mixture was agitated at 9000 rpm for 3 minutes.

Table 4

| | Coal (C) mined in Australia |
|---|---|
| Content | |
| Inherent moisture (%) | 3.5 |
| Ash (%) | 12.8 |
| Volatile matter (g) | 32.6 |
| Fixed carbon (g) | 50.9 |
| Particle size | |
| 200 mesh pass (%) | 78. |

The viscosity of the slurry was measured at 25°C using a Broockfield viscometer (BL viscometer: rotar number;3) and fluidity was observed.

200 cc of the slurry was charged into a sampling tube having a diameter of 58 mm and a height of 115 mm, and was allowed to stand for one month. Thereafter the bottom of the tube was examined for uneven condensed parts. The results are shown in Table 6.

Example 13

A solution of a salt was prepared in the same manner as in Example 12 except for using 3.64 parts by weight of sodium hydroxide instead of ammonia water. The aqueous solution obtained had a concentration of 10.4 % by weight and the degree of neutralization of the polymer was 0.7.

The slurry was prepared in the same manner as in Example 12 except for using the salt obtained above. The fluidity and stability of the slurry were measured. The results are shown in Table 6.

Example 14 - 15 and Comparative Example 5

Isobutylene, maleic anhydride and unsaturated acid ester (modifier ) were polymerized in the same manner as in Example 12 except for the type of modifier, amount of the modifier and temperature. The product obtained was a polymer of unsaturated acid ester, isobutylene and maleic anhydride in a molar ratio of 0.054/1/1; its weight average molecuar weight is shown in Table 6. The polymer was added to an aqueous solution containing sodium hydroxide or ammonia to form a salt of the polymer according to the recipe shown in Table 5.

The slurry was prepared in the same manner as in Example 12 except for using the salt obtained above. The fluidity and the stability of the slurry were measured. The results are shown in Table 6.

For comparison an alternating isobutene-maleic anhydride copolymer was prepared. The copolymer was dissolved in water to form the salt of the copolymer in the same way as above. The slurry obtained using the above salt did not have a lower viscosity.

Table 5

| | Conditions of copolymerization and results | | | | | | | | | Conditions of dissolving | | | Solution |
|---|---|---|---|---|---|---|---|---|---|---|---|---|---|
| | | Solution fed for polymerization | | | | | | | | | | | |
| | Temp. of polymerization (°C) | Modifier | | | Initator | | Maleic anhydride | Conversion (%) | Basic Compound | | Amount of water (pt. per 10 pt. of polymer | Conc. (wt %) |
| | | Kind | Amount (g) | Mole % (base: maleic anhydride) | Amount of AZN (g) | Mole % (base: maleic anhydride) | Amount (g) of maleic anhydride | | Kind | Amount (pt. per 10 pt. of polymer) | | |
| Example 12 | 105 | n-docosyl methacrylate | 10.10 | 5.4 | 1.95 | 2.5 | 46.5 | 98.5 | $NH_3$ | 5.09 | 120 | 9.65 |
| do 13 | do | do | do | do | do | do | do | do | NaOH | 3.64 | do | 10.40 |
| do 14 | 110 | n-dodecyl methacrylate | 6.27 | do | do | do | do | 99.3 | $NH_3$ | 5.37 | do | 9.50 |
| do 15 | do | n-octyl methacrylate | 4.92 | do | do | do | do | 99.2 | $NH_3$ | 5.50 | do | 9.55 |
| Comparative Example 5 | 105 | - | - | - | 2.05 | do | 49.0 | 99.7 | NaOH | 3.57 | do | 10.32 |

Note AZN: Azobisisobutylnitrile
$NH_3$: An aqueous solution of the concentratio 26.5 % by weight was used.
NaOH: Sodium hydroxide

Table 6

| | Dispersing agent | | | | Properties of slurry of of coal mined in Autralia | | |
|---|---|---|---|---|---|---|---|
| | Modified polymer | | Salt of polymer | | | | |
| | Weight average molecular weight | Unsaturated acid ester | Salt | Degree of neutralization | Viscosity (cp) | Fluidity | Stability presence or absence of condensed part |
| Example 12 | 9,800 | n-docosyl methacrylate | $NH_4$ | 0.7 | 900 | high | absence |
| do 13 | do | do | Na | do | 500 | high | absence |
| do 14 | 7,300 | n-dodecyl methacrylate | $NH_4$ | do | 960 | high | absence |
| do 15 | 7,100 | n-octyl methacrylate | do | do | 1100 | high | absence |
| Comparative Example 5 | 6,600 | - | Na | 0.5 | more than 20000 | no | |
| Comparative Example 6 | Sodium salt of formaldehyde naphthalene sulphonic acid condensate | | | | 4030 | poor | presence |
| Comparative Example 7 | Polyoxyethylene(10 units)nonyl phenyl ether | | | | more than 20000 | no | |
| Comparative Example 8 | Sodium sulfate of polyoxyethylene(10 units) nonylphenyl ether | | | | do | no | |

Comparative Example 6 - 8

A slurry was prepared in the same manner as in Example 12 except for using a commercial dispersing agent: a sodium salt of formaldehyde-naphtalene sulphonic acid condensate, polyoxyethylene (10 units) nonylphenyl ether and its sodium sulfate. The results are shown in Table 6.

As can be seen from the above, when the commercial dispersing agent is used, the coal-water slurry obtained has a very high viscosity at a concentration of 70% by weight. However, the slurry poses problems as to fluidity. By contrast, when the dispersing agent of the present invention is used, the slurry obtained has a viscosity lower than 3,000 centipoise (cp). Therefore, the slurry is easier to transport and to handle and combustion is controlled more easily. Furthermore, the slurry remains even when it is allowed to stand for a long period.

What is claimed is

1. A dispersing agent for a coal-water slurry, comprising a polyelectrolyte made by reacting an alkali metal compound, an alkali earth metal compound, ammonia or an amine with a modified α-olefin-maleic anhydride copolymer comprising a structural unit [I] based on the α-olefin, a structural unit [II] based on maleic anhydride and a modified structural unit selected from the group consisting of

[A] a terminal group [III] of the general formula

$R^1S-$

wherein $R^1$ represents a hydrocarbon residue having 4 to 30 carbon atoms, and

[B] a structural unit [IV] of the general formula

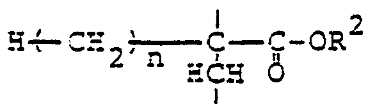

wherein $R^2$ represents a hydrocarbon residue having 4 to 30 carbon atoms and n is zero or 1, the structural unit [IV] being contained in the main chain, the molar ratio of the unit [IV] to the unit [II] ranging from 0.005 to 0.2, said copolymer containing units [I] and [II] in such an amount that the molar ratio unit [I] to unit [II] is in the range of from 0.8 to 3.0 and having a weight average molecular weight of 1,000 to 20,000.

2. The dispersing agent according to claim 1 wherein the α-olefin is an α-olefin having 4 carbon atoms.

3. The dispersing agent according to claim 1 wherein the α-olefin is isobutylene.

4. The dispersing agent according to claim 1 wherein $R^1$ is an alkyl group having 4 to 30 carbon atoms.

5. The dispersing agent according to claim 1 wherein $R^2$ is an alkyl group having 4 to 30 carbon atoms.

6. A coal-water slurry containing coal, water and dispersing agent comprising a polyelectrolyte according to claim 1.